# EUROPEAN PATENT SPECIFICATION

(11) **EP 0 709 470 B1**
(45) Date of publication and mention of the grant of the patent: **04.10.2001**
(21) Application number: 95900316.1
(22) Date of filing: 09.11.1994
(51) Int. Cl.: C21D 8/12, C22C 38/02

(54) **PRODUCTION METHOD OF DIRECTIONAL ELECTROMAGNETIC STEEL SHEET OF LOW TEMPERATURE SLAB HEATING SYSTEM**
VERFAHREN ZUR HERSTELLUNG VON STAHLBLECH MIT GERICHTETER MAGNETISIERUNG UNTERVERWENDUNG VON NIEDRIGEN BRAMMENAUFHEIZTEMPERATUREN.
PROCEDE DE PRODUCTION DE TOLE D'ACIER A CHAMP ELECTROMAGNETIQUE DIRECTIONNEL AVEC CHAUFFAGE DE BRAMES A BASSE TEMPERATURE

(30) Priority: 09.11.1993 KR 1993237; 29.08.1994 KR 1994213; 29.08.1994 KR 1994213; 29.08.1994 KR 1994213; 29.08.1994 KR 1994213
(43) Date of publication of application: 01.05.1996
(73) Proprietor: POHANG IRON & STEEL CO., LTD., Pohang City, Kyong Sang Book-Do 790-300 (KR); RESEARCH INSTITUTE OF INDUSTRIAL SCIENCE & TECHNOLOGY, Pohang City, Kyong Sang Book-Do 790-330 (KR)
(72) Inventor: CHOI, Gyu Seung, Res.Inst.of Ind.Science & Tech, Kyong Sang Book-do 7g90-330 (KR); LEE, Chung San, Res.Inst.of Ind. Science & Tech, Kyong Sang Book-do 790-330 (KR); WOO, Jong Soo, Res. Inst.of Ind. Science & Tech., Kyong Sang Book-do 790-330 (KR); HONG, Byung D., Res. Inst. of Ind.Science & Tech., Kyong Sang Book-do 790-330 (KR)
(74) Representative: Götz, Georg, Dipl.-Ing.
(86) International application number: KR9400160
(87) International publication number: WO9513401

(56) References cited:
- EP-A- 0 150 909
- WO-A-93/01325
- DE-C- 4 311 151
- FR-A- 2 201 342
- JP-B- 61 060 896
- JP-B- 62 050 529
- JP-B- 62 054 846

## Description

### FIELD OF THE INVENTION

The present invention relates to an oriented electrical steel sheet for use as steel cores in transformers, electric motors, electric generators and other electric and electronic apparatuses. Particularly, the present invention relates to an oriented electrical steel sheet in which a steel slab composed of a particular composition is heated at a temperature lower than the conventional level, then a hot rolling is carried out, and then, a stabilization stage is undergone through a secondary recrystallization, whereby the oriented electrical steel sheet is made to have superior magnetic properties.

### BACKGROUND OF THE INVENTION

The oriented electrical steel sheet has a texture in which the crystal grains have (110)[001] orientations. This product has extremely superior magnetic properties in the rolling direction, and by utilizing these properties, the product is used in transformers, electric motors, electric generators and other electric and electronic apparatuses as steel cores. This (110)[001] texture is obtained through a secondary recrystallization, and the secondary recrystallization grains are formed in such a manner that particularly oriented nuclei, i.e., nuclei having a (110)[001] orientation among the fine primary recrystallization grains are abnormally grown throughout the entire test piece. If such a secondary recrystallization having the particular orientation are to be promoted, the growth of the primary recrystallization grains has to be inhibited, and, for this purpose, precipitates of MnS, AlN and BN are used.

The oriented electrical steel sheet can be classified into two kinds based on the magnetic properties. The first is the conventional oriented electrical steel sheet which was almost perfected in 1960's, since Armco Company of the United States began industrial production from the early 1940's. This oriented electrical steel sheet shows a deviation of about 7° of the orientation [001] relative to the rolling direction, while its magnetic flux density is about 1.80 - 1.86 Tesla at B10. The second kind is that which was developed by NSC company of Japan in 1970's, and this oriented electrical steel sheet shows a far more superior magnetic properties than the first kind. That is, the magnetic flux density is over 1.89 Tesla at B10, and the orientation [001] shows a deviation of only 3°.

Generally, the oriented electrical steel sheet is manufactured in the following manner. Generally, the steel slab contains 2 - 4% of silicon, and also contains grain growth inhibitors such as MnS, MnSe, and AlN. Then the steel slab undergoes complicated process steps: reheating and hot rolling-preliminary annealing first cold rolling - intermediate annealing-second cold rolling - decarburization annealing - coating of an annealing separator -final finish annealing - tension coating treatment. This is a first method, and a second method is carried out in the following manner. That is, first a preliminary annealing is carried out, then one - stage of strong rolling is carried out to the final thickness, and then, a decarburization annealing is carried out.

In the complicated manufacturing process for the oriented electrical steel sheet, the most difficult process step is the reheating step in which the steel slab is subjected to a high temperature heat treatment. In carrying out this steel slab reheating step, the precipitates of MnS or AlN are made to be finely precipitated after solid-solution spreading. In order to achieve this, it is unavoidable that the slab has to be heated to as high as 1400°C, and has to be maintained at this temperature for 5 hours. Under this condition, the slab surface is reacted with the air, and consequently, there is formed an oxide called faylite (2FeO·SiO₂) which is a composite material composed of Si oxides and Fe oxides. This oxide has a melting point as low as 1300°C, and therefore, its melt flows down along the surface of the slab. This oxide melt is designed to flow down to the outside, but a part of it is accumulated within the refractory material of the upper portion of the furnace. Therefore, upon completion of the slab reheating step, the interior of the furnace has to be repaired. Therefore, in a steel plant in which a continuous working is required, the work efficiency is lowered, the productivity is lowered, and the manufacturing cost is increased. Therefore, if it is possible to reheat the slab only to 1250 - 1280°C which is the heating condition for the ordinary steel, then the interference to the general steels can be eliminated, as well as obtaining other advantages. This will be a great advantage.

The lowering of the slab reheating temperature is intensively researched by many steel manufacturing companies, and many methods have been proposed. Most of the proposals aim at ensuring that the required magnetic properties are obtained by reheating the steel slab up to below the highest slab non-melting temperature (1300 - 1320°C) in principle.

Most of the proposals are focused on adjusting the basic composition, and on selecting a proper grain growth inhibitor which contributes to the formation of the secondary recrystallization of the (110)[001] orientation. In addition to the adjustment of the basic composition, the precipitate managing techniques are also proposed.

These proposals are found in Japanese Patent Laid-open No. Hei-1-230721, Hei-1-283324, Hei-4-235222, hei-4-173923, hei-3-294427, Sho-59-56522, and sho-59-190325.

All of them provides an oriented electrical steel sheet showing a flux density of over 1.89 Tesla at B10. The target slab reheating temperature is below 1200°C, and usually the slab is heated only up to 1150°C. Further, in order to ensure a high magnetic flux density, the N ingredient which is a grain growth inhibitor is supplemented during the process. For this, there is added the nitrogenizing treatment to infuse nitrogen into the slab after carrying out the decarburization annealing. Therefore, in these techniques, the slab reheating is carried out at a temperature lower than 1250 - 1280° C which is the heating temperature for the ordinary steel. Therefore, there occur interferences, and an additional facility for the nitrogenizing treatment has to be built, thereby increasing the manufacturing cost. Further, in spite of the low reheating temperature, one - stage of a strong rolling is adopted for ensuring a strong grain growth inhibiting force, and therefore, the process control becomes difficult, with the result that severe differences between different lots are generated, thereby lowering the actual yield. Therefore, this low temperature heating method can be applied to only the expensive product.

Meanwhile, ALSCO Company of the United States reported that an electrical steel sheet can be manufactured by properly controlling the Mn/S ratio based on the low temperature reheating condition of Japanese Patent Laid-open No. Sho-57-158322. However, in this method, the control of the grain growth inhibition strength is difficult, and therefore, stable magnetic properties cannot be obtained.

EP 0 150 909 discloses a method for a grain-oriented silicon steel sheet such that a slab could be heated at a low temperature of 1250 ∼ 1380° C (compared to that of the conventional techniques, 1400° C) by adopting a slab induction heating furnace. However, the slab induction heating furnace is high-price facilities, and therefore, it is not preferred in view of the product economy.

US 4,623,407 discloses the technique for obtaining the reheating temperature of 1280° C or below by changing the inhibitor system from AIN + MnS to AlN + MnP. However, the differentiation of the magnetic properties obtained occurs much toward the length direction of the coil, and therefore, it could be not possible to obtain the grain-oriented steel sheet having the superior physical properties reliably.

The electrical steel sheets according to the German Patent 43 11 151, the French laid-open publication 2.201.342 and the Japanese laid-open publication 62-54 846 suffer from their high sulphur content of more than 0,01 %. This results in an intense segregation of MnS precipitates at high temperatures, and then AlN is precipitated around the MnS precipitates, with the result that the precipitates become large and non-uniform. So there is no effective grain growth inhibition and the steel becomes brittle.

The International Publication WO 93/01325 shows a grain oriented electrical steel sheet having superior magnetic properties, but there is a high content of phosphorus aggravating the cold rollability and making this steel too brittle for many applications.

### SUMMARY OF THE INVENTION

It is an object of the present invention to provide a method for manufacturing an improved oriented electrical steel sheet in which the steel composition is designed so as to heat the steel slab at 1250 - 1320° C and to carry out a hot rolling, the preliminary annealing is omitted so as make it possible to carry out the process even without additional facility and so as to stably form the secondary recrystallization of the (110)[001] orientation by securing a stable grain growth inhibiting strength, and a decarburization annealing is carried out at an intermediate thickness, thereby lowering the processing energy at the final rolling, and obtaining stable magnetic properties. It is another object of the present invention to provide a method for manufacturing an oriented electrical steel sheet, in which the heating rate is properly controlled during the final annealing so as to control the primary recrystallization grains to a fine scale, and so as to secure a driving force for the secondary recrystallization, so that the intermediate recovery annealing after the final cold rolling can be omitted, and that magnetic properties equivalent to those of the usual oriented electrical steel sheet or more can be ensured.

It is still another object of the present invention to provide a method for manufacturing an oriented electrical steel sheet, in which the atmosphere for the intermediate recovering annealing is humid unlike the conventional dry one so as for oxides to be formed, and the annealing temperature is raised up so as to be advantageous for the formation of oxides, so that intermediate annealing conditions optimally suitable for the formation of glass coating can be provided, thereby obtaining an oriented electrical steel sheet having a superior glass film characteristics and superior magnetic properties.

In manufacturing the oriented electrical steel sheet, the composition includes in weight %: 0.035 - 0-050 % of C, 2.9 - 3.3 % of Si, less than 0.015 % of P, 0.011-0.017 % of soluble Al 0.008 - 0.012% of N, less than 0.007% of S, 0.06 - 0.18% of Ni and/or Cr, less than 0.32% of Mn, less than 0.6% of Cu, balance of Fe, and other inevitable impurities. Then, a slab which is composed as described above, and in which the Mn/S weight ratio is more than 20.0, and in which the Cu/Mn weight ratio is more than 1.5 is heated to a temperature range of 1250 -1320°C.

Then a hot rolling is carried out, and then, two - stage of cold rolling containing a carburization annealing is carried out to a final thickness. Then an intermediate annealing is carried out, and there is coated an annealing separator containing MgO as the main ingredient. Then a finish annealing is carried out, thereby obtaining an oriented electrical steel sheet having superior magnetic properties.

Further, in another aspect of the present invention, in carrying out the manufacturing method of the present invention, the intermediate annealing is omitted, and instead, during the final annealing, the heating rate in the temperature range of 400-700°C is maintained at below 50°C/hr, thereby obtaining the oriented electrical steel sheet.

Further, in still another aspect of the present invention, in carrying out the manufacturing method of the present invention, the intermediate recovery annealing is carried out for 45 seconds to 2 minutes at a temperature of 600 -750°C under a humid atmosphere with a P_{H2O}/P_{H2} ratio of 0.62 - 0.88, thereby obtaining an oriented electrical steel sheet having a superior glass film characteristics.

Further, in still another aspect of the present invention, in carrying out the manufacturing method of the present invention, during the finish annealing, the heating rate in the temperature range of 400 - 700 ° C is maintained over 20 C °/hr, thereby obtaining an oriented electrical steel sheet.

### BRIEF DESCRIPTION OF THE DRAWINGS

The above object and other advantages of the present invention will become more apparent by describing in detail the preferred embodiment of the present invention with reference to the attached drawings in which:
FIG. 1 is a graphical illustration showing the magnetic flux density B₁₀ and the formation ratio of fine grains among the secondary recrystallization grains versus the variation of the amount of soluble Al;
FIG. 2 is a graphical illustration showing the magnetic flux density B₁₀ and the formation ratio of fine grains among the secondary recrystallization grains versus the variation of the amount of S;
FIG. 3 is a graphical illustration showing the magnetic flux density B₁₀ and the close adherence of the glass coating of the product versus the variation of the Mn/S ratio;
FIG. 4 is a graphical illustration showing the flux density B₁₀ and the iron loss W_{17/50} versus the variation of the Cu/Mn ratio; and
FIG. 5 is a graphical illustration showing the magnetic flux density B₁₀ and the material melt amount versus the slab reheating temperature.

### DESCRIPTION OF THE PREFERRED EMBODIMENT

The basic conception of the present invention is that a new manufacturing process is secured for designing a composition system allowing a low temperature slab heating and enabling the control of an optimum grain growth inhibitor.

In one embodiment of the present invention, the basic grain growth inhibitor is AlN, and the auxiliary ones are Cu₂S and MnS. Further, in the present invention, the precipitation of MnS which is used in the usual high temperature slab heating is inhibited as much as possible. For this purpose, the content of S is limited to less then 0.007% which is the minimum amount to control.

The present inventors observed the behaviors of the precipitates, and found the following facts. That is, the solid solution temperature for MnS is about 1280°C, and the next is AlN, while that for Cu₂S is 1200°C. Further, the precipitating temperature for MnS during the hot rolling is 1200°C, but that for AlN is lower than that temperature, while that for Cu₂S is as low as 1100°C.

Therefore, when carrying out a hot rolling based on the high temperature heating of the slab, MnS is first precipitated at the high temperature, and then, AlN is precipitated. When AlN is precipitated, the MnS precipitates exist within the steel, and therefore, a co-precipitation phenomenon occurs in which AlN is precipitated around MnS. Therefore, the AlN precipitates are influenced by the MnS precipitates, with the result that the AlN precipitates becomes large and non-uniform. Therefore, although the amount is large, the amount of the actually acting proper sized grain growth inhibitor becomes insufficient.

Therefore, in the present invention, the AIN which is more advantageous for the low temperature slab heating is used as the grain growth inhibitor, and thus, the S which is inevitably exists is made to be precipitated in the form of CU₂S. Thus the AIN which is formed during the cooling after a hot rolling is not influenced by MnS, with the result that AIN forms precipitates having fine and uniform sizes so as for it to be effective for inhibiting the grain growth.

The present invention is different from the conventional method for manufacturing high magnetic flux density oriented electrical steel sheet in which the Al content is 0.023 - 0.028 %, and in which only one-stage of cold rolling is carried out whit a high reduction rate of 85 - 90 %, thereby requiring a strong grain growth inhibiting strength. The present invention lowers the Al content to 0.011-0.017, and two-stage of rolling is carried out, so that the secondary recrystallization would be facilitated. Therefore, in the present invention, though the magnetic flux density is somewhat low, the differences of the magnetic properties between the products are very small and the magnetic properties are uniform between the products.

Regarding S, the present invention focuses on the control of the upper limit, and this is an important task, in manufacturing the electrical steel sheet, the solidifying speed is slow in the internal region of the heated slab having a thickness of 200 - 250 mm, and therefore, S is intensively segregated to the internal region. Therefore, for the solid solution of S and uniform diffusion of S up to the surface, there is required a slab heating temperature which is sufficiently higher than the theoretical temperature level.

In the present invention, the amount of S is inhibited as much as possible, so that the adverse effect of the S segregation can be prevented. Further, during the hot rolling, S is precipitated in the form a of sulfide Cu₂S at a low temperature of 1100 ° C, and therefore, the adverse effect of the distribution of coarse and non-uniform AlN which occurs in the case of the MnS precipitation is prevented, this being the major feature of the grain growth inhibitor of the present invention.

Owing to such high Mn and low S controls, AlN mostly can undergo a solid solution precipitation in spite of a low temperature slab heating, so that a sufficient grain growth inhibiting strength can be secured during the secondary recrystallization.

In addition, the addition of Cr and Ni renders the primary recrystallization grains fine and uniform. Particularly, the workable temperature range for the slab heating can be expanded, and therefore, there are prevented the work interferences which can be caused by the heating temperature difference between the slab and other steel products, thereby making it possible to achieve the object of the present invention.

The magnetic properties of the final product are decided by to what extent the grain growth inhibiting precipitates perform the optimum role during the secondary recrystallization. For this purpose, a proper process for the composition system of the present invention has to be established.

The composition system of the present invention is an AlN main system having low content of S. In this composition system, AlN is precipitated in a fine form which is advantageous for the secondary recrystallization during the cooling after a hot rolling, and therefore, thereafter, a hot rolled sheet annealing is not required, but a cold rolling is directly carried out.

Further, a decarburization annealing is carried out at an intermediate thickness, so that the second rolling can be carried out under a low carbon content. Consequently, the deformation energy which is accumulated in the steel sheet becomes small, and, thereafter, an intermediate recovery annealing is carried out at a relatively low temperature of 500 - 650°C, so that the primary recrystallization grains would be fine and uniform during the finish annealing. These are important features of the present invention.

Based on the above described method, the secondary recrystallization grains form a texture which is arranged in the (110)[001} orientation which is the easy magnetization orientation.

In another embodiment of the present invention, in the low temperature reheating technique, the intermediate recovery annealing which is carried out after the final thickness rolling is omitted, and instead, the metallurgical role of this portion can be supplemented at a later process step. This will be described below.

That is, in the conventional method for manufacturing the oriented electrical steel sheet in which two-stage of rolling are carried out, the annealing after the second rolling is for recovering the deformation energy of the rolling and is for perfecting the primary recrystallization. The formation state of the primary recrystallization grains decides the formation state of the secondary recrystallization grains which utilizes the abnormal growth of the primary recrystallization grains which are formed in the finish annealing.

However, in the production line, the couple of annealing accompanying the two-stage rolling are a great burden in view of the facility management and productivity. Therefore, if the same magnetic properties can be secured with one-stage of annealing and rolling, a great advantage can be obtained.

Therefore, in the present invention, while observing the secondary recrystallization principle and the grain growth mechanism, the second recovery annealing is omitted, and, in the low temperature interval of the finish annealing, the heating rate is maintained at below 50°C/hr, so that the rolling structure can be recovered in the temperature range of 400 - 500°C, and that fine and uniform primary recrystallization grains can be secured in the temperature range of 500 - 650°C.

Owing to these fine and uniform primary recrystallization grains, there is secured the driving force for the secondary recrystallization which occurs in the subsequent temperature range of 870 - 970°C. Thus there are ensured secondary recrystallization grains which have superior magnetic properties, and which are arranged in the (110)[001] orientation.

In another embodiment of the present invention, in order to improve the glass film characteristics, the intermediate recovery annealing can be carried out at a slightly higher temperature of 600 - 700°C for 45 seconds to 2 minutes under a humid atmosphere having a P_{H2O}/P_{H2} ratio of 0.62 - 0.88. This will be described below in detail.

The present invention has a particular metallurgical background such that a decarburization annealing has to be carried out at an intermediate thickness of 0.60 - 0.75 mm. Therefore, an optimum control is necessary in view of the decarburization. In addition, as the forsterite film (Mg₂SiO₄) formed during the finish annealing depends on the quality and amount of the oxides which are formed on the outside and inside of the steel, more strict production line control has to be carried out compared with the conventional method in which the decarburization annealing is carried out at the final thickness of 0.23 - 0.35 mm.

The present inventors investigated the various factors related to the forsterite film characteristics, and found the following facts. That is, the oxide layer which is formed during the decarburization annealing at an intermediate thickness are partially cracked after second cold rolling, and as a result, an unstable forsterite film, which is partially peeled, is formed. Therefore, in such regions, the color of the overall coating layer looks non-uniform, and the insulation and the surface roughness are degraded. Further, at the cracked layer, there are such oxides as SiO₂ and Fe₂SiO₄, but there are FeO as well as SiO₂ and Fe₂SiO₄ at the non-cracked layer. Therefore, in forming the forsterite film, it is certain that a complement of FeO which performs the role of a reaction catalyst is required. Therefore, it is necessary that there has to be provided an operating condition in which the recovery structure (which is beneficial to the magnetic properties) can be maintained while providing a condition advantageous to the formation of FeO.

Therefore, various factors for ensuring an optimum operating condition of the recovery annealing were reviewed, and the following facts were found. A stepping-up of the annealing temperature can provide the most advantageous condition for the formation of FeO. However, the stepping-up of the temperature provides a condition for the formation of the primary recrystallization grains, and therefore, a fatal defect may be caused in the primary and secondary recrystallization during the finish annealing. Therefore, it is absolutely necessary that the annealing time be properly controlled.

If the annealing temperature is decided, the kinds of the oxides on the surface of the steel are decided by the P_{H2O}/P_{H2} ratio of the atmospheric gas during the oxidation reaction. The steel of the present invention requires an oxide including FeO, and therefore, the P_{H2O}/P_{H2} ratio has to be controlled to a slightly high level in view of the production line.

Particularly, the partial pressure of the H₂ gas within the atmospheric gas plays the major role in the oxidation, and therefore, the partial pressure of the H₂ gas should be adjusted to 20 - 25%. If the partial pressure of H₂ is decided, the dew point is controlled for the optimum P_{H2O}/P_{H2}. The oxides which are required during the recovery annealing are the oxides including FeO which are filled into the cracks formed during the second rolling, and therefore, the P_{H2O}/P_{H2} ratio has to be controlled to a level as high as possible, so that the formation of faylite or silica on the surface can be controlled.

Further, the annealing time has a meaning not more than for the recovery annealing, and therefore, it has to be assessed in view of the stable magnetic properties. That is, it is desirable that the temperature should be as high as possible, and the time has to be as short as possible.

As described above, the temperature, time and atmosphere for the intermediate recovery annealing can be properly controlled, so that the following advantages can be obtained. That is, the enormous advantages of the conventional oriented electrical steel sheet based on low temperature slab reheating process can be obtained, and stable magnetic properties can be ensured, and simultaneously an acceptable glass film can be formed so as for users of the product to enjoy convenience.

The composition system of the present invention contains almost no S but mainly AIN. The AIN system grants that even in the low temperature heating, fine precipitates which are effective for the secondary recrystallization can be formed during a hot rolling. Therefore, without carrying out a hot rolled sheet annealing, a cold rolling is directly carried out. Further, a decarburization annealing is carried out at an intermediate thickness to reduce the content of C, and at this time, a surface oxide layer is also formed. Then a secondary cold rolling is carried out under a low carbon content, so that the processing energy would be as small as possible. Thereafter, a recovery annealing is carried out at a relatively low temperature of 500 - 650 ° C, so that the processing structure of the rolling can be recovered. Accordingly, the primary recrystallization and the secondary recrystallization occur during the finish annealing.

Therefore, the process control is concentrated on the finish annealing. During this process step, for the preferred growth of the (110) [001] orientation, the primary recrystallization grains should be small and uniform, which is essential to develop complete secondary recrystallization.

For his purpose, the temperature raising rate in the temperature range of 400 - 700 ° C which is the primary recrystallization temperature is maintained faster than 25 ° C/hr., so that the primary recrystallization grains would be small and uniform. At this time, a strong grain growth inhibiting strength should be maintained in order to develop the secondary recrystallization which occurs at a temperature of 870 - 950 ° C. And thereby, the superior secondary recrystallization grains having the (110) [001] orientation can be obtained, and as a result, it is possible to manufacture a high magnetic flux density oriented electrical steel sheet.

In order to manufacture an oriented electrical steel sheet having stable magnetic properties, the amount of soluble Al is limited to 0.011 - 0.012%, and at the same time, the atmospheric gas in the temperature-raising stage can be controlled during the finish annealing. This will be described in detail below.

The present inventors observed the behaviors of the AlN precipitates which are the main precipitates for inhibiting the grain growth during the respective process steps, and found the following facts.

That is, the AlN precipitates can be controlled as to their amount during the steel manufacturing process. Thereafter, some quality adjustment of some fine needle-like type precipitates is achieved during the hot rolling, and thereafter, some fine and non-uniform plate type precipitates are formed during the intermediate decarburization annealing. Thereafter, during the final finish annealing and in the temperature interval from 800°C to 920 - 980°C just before the secondary recrystallization, the unreacted Al are reacted with N to produce AlN precipitates after nitrogen of the atmospheric gas is intruded into the steel. Thus the AlN precipitates are somewhat increased, while some part of N is reacted with Si within the steel to form Si₃N₄ precipitates, thereby reinforcing the grain growth inhibiting strength.

Under this condition, the conditions including the amount and size of the AlN precipitates can be different depending on the given operating conditions. After all, however, they are decided by the content of N within the atmospheric gas, and therefore, ensuring the optimum content of N within the atmospheric gas is important.

Under this condition, the amount and conditions of the precipitates which are effective for the secondary recrystallization are decisively influenced by the amounts of Al and N in the stage of the steel making. Thereafter, the size and distribution are varied by the variation of the operating conditions, the final size and distribution of the precipitates are decided by the amount, size and distribution of the precipitates just before the initiation of the secondary recrystallization during the final finish annealing.

Under this condition, if the amount of AlN is too large so as for the grain growth inhibiting strength to be strong, the secondary recrystallization is completed by the normal growth other than the preferred growth of the grains having the (110) [001] orientation. Therefore, there are formed only fine grains which are disadvantageous for the magnetic properties, thereby degrading the oriented electrical steel sheet.

On the other hand, if the AlN precipitates are too small so as for the grain growth inhibiting strength to be too insufficient, there are formed secondary recrystallization grains which are poor in the orientation due to the growth of random orientation grains, thereby degrading the electrical steel sheet.

Under this condition, for the optimum grain growth inhibiting strength, an optimum balance between the amount of Al and the amount of N are required. If the amount of soluble Al is too low, the excessive absorption of N causes fine precipitates of 100-1000 Å to be formed initially, and later, they are formed into large precipitates of Si(Mn)N or Al(Mn)N, with the result that the growth of the primary recrystallization grains cannot be inhibited. Consequently, orientations which are disadvantageous to the magnetic properties are grown, thereby degrading the magnetic properties. Therefore, the optimum absorption of N suitably to the amount of soluble Al is necessary to ensure a high magnetic flux density.

Therefore, if the initial amount of soluble Al is too small, then the amount of N should be controlled accordingly during the process. That is, the nitrogen content within the atmospheric gas should be controlled to a low level, so that the nitrogen would be absorbed into the steel during the final finish annealing.

Thus, in the present invention, the nitrogen content within the atmospheric gas is controlled to a low level during the heating stage of the finish annealing, so that stable magnetic properties can be ensured even under a low level of soluble Al.

Now the reason for the limitation of the ingredient ranges and the manufacturing conditions will be described below.

Carbon (C) acts to form a proper hot rolled structure for ensuring a high magnetic flux density of the oriented electrical steel sheet, and provides a high level of the deformation energy during the cold rolling. Therefore, C is required at least 0.035%, but if its content is more than 0.05%, then the decarburization is aggravated. Further, if the residual carbon level is high, the magnetic properties are degraded when the product is used by users. Therefore, the content of C should be desirably limited to a range of 0.035-0.050 %.

Silicon (Si) is a basic ingredient of the electrical steel sheet, and acts to raise the resistivity of the steel sheet, thereby reducing the iron loss. If the content of Si is lower than 2.9%, the iron loss is aggravated. On the other hand, if its content is higher than 3.3%, the steel become brittle, with the result that the cold rollability is aggravated. Further, the secondary recrystallization becomes unstable, and consequently, there is generated a defect called "streak" which is a portion of an defect formation of the secondary recrystallization in the lengthwise direction. Therefore, the content of Si should be desirably limited to a range of 2.9 - 3.3%.

Manganese (Mn) acts to lower the solid solution temperature of the precipitates during the heating of the steel slab, and prevents the formation of cracks on the both side edges of the steel sheet during the hot rolling. If its content is exceeds 0.32%, the close adherence of the forsterite insulating film which is formed by the Mn oxides (which are formed during the decarburization annealing) is aggravated. Therefore, the content of Mn should be desirably limited to less than 0.32%.

Further, Mn forms precipitates together with the tiny amount of S, and therefore, the control of the amount ratio of Mn/S is important. This ratio should be controlled to at least 20 or more, so that stable secondary recrystallization grains can be obtained with a low level of fine grain generation. Therefore, it is desirable that the weight ratio of Mn/S should be desirably limited to 20 or more.

Sulphur (S) forms precipitates of sulfides of Cu and Mn to act as a grain growth inhibitor. That is, it performs an auxiliary function to AlN. Generally, S is contained up to 0.005%, and its content should be as low as possible. If the content of S exceeds 0.007%, the segregation of S becomes severe in the central portion of the slab during the solidification of the slab after the continuous casting. Further, owing to the low temperature heating of the slab, the solid solution and diffusion in the central portion of the slab becomes difficult during the hot rolling, and therefore, property deviations can occur in the final product. Therefore, sulphur purification process step has to be employed to strongly inhibit its content, and thus, its content should be desirably limited to less than 0.007%.

Aluminum (Al) is a basic ingredient which forms AlN precipitates by being reacted with N so as to inhibit the grain growth. The total amount of Al does not have a significant meaning, but the amount of soluble Al is important. If the content of Al is less than 0.01%, the grain growth inhibiting strength sufficient for the secondary recrystallization is not provided, with the result that fine grains having small sizes and imperfect shapes are formed in the final product. On the other hand, if its content exceeds 0.017%, too strong a grain growth inhibiting strength is provided, with the result that the magnetically advantageous (110)[001] orientation cannot be developed, and that the magnetic properties are drastically degraded. Therefore, the content of soluble Al should be desirably limited to a range of 0.011 - 0.017%.

Nitrogen (N) reacts with the soluble Al to form AIN precipitates, thereby inhibiting the grain growth of the primary recrystallization. Therefore, N is an indispensable element for the secondary recrystallization. If its content is less than 0.008%, the formation of the precipitates becomes insufficient, while if its content exceeds 0.012%, a defect called blister is formed on the surface of the steel sheet, thereby deteriorating the surface characteristics of the product. Therefore, the content of N should be desirably limited to a range of 0.008-0.012%.

Phosphorus (P) tends to make the steel brittle, and therefore, it is more advantageous as its content is smaller. Further, its control range in the plant is up to 0.015%, and if it is added more, the cold rollability is aggravated. Therefore, its addition amount has to be restricted and therefore, the content of P should be desirably limited to less than 0.016%.

Copper (Cu) reacts with S to form precipitates of Cu₂S, and Cu₂S is resolved at the lowest temperature among the precipitates. Further, it is precipitated at a low temperature during the hot rolling so as to reinforce the grain growth inhibiting strength of A1N, thereby facilitating the secondary recrystallization. If the content of Cu exceeds 0.6%, an adverse effect is given to the oxides which form an insulating coating layer after being formed during the decarburization annealing. Further, the sizes of the secondary recrystallization grains become too large, and therefore, the iron loss is aggravated, although the magnetic flux density is high. Therefore, the total content of Cu should be desirably limited to less than 0.6%.

In the present invention, it is important that the S ingredient is prevented from being reacted into MnS, but is made to react into Cu₂S. Therefore, the ratio of Cu/S has to be properly controlled. Therefore, it is desirable that the ratio of Cu/Mn is limited to 1.5 or more.

Nickel (Ni) and chromium (Cr) not only make the primary recrystallization grains fine, but also are high in their precipitate dispersing effect. Therefore, the optimum slab heating temperature range can be expanded. Therefore, if the slab heating is to be carried out at a temperature of 1250-1320°C, Ni and/or Cr should be added by at least 0.06%. If they are added in the amount of 0.18%, they react with the C element of the steel, thereby aggravating the decarburizability. Therefore, Ni and/or Cr should be desirably limited to a range of 0.06-0.18%.

The above described composition system is for lowering the slab heating temperature which is the most difficult problem in manufacturing the oriented electrical steel sheet. If this composition system is used, the slab heating may be carried out at a temperature of 1250 - 1270°C, and notwithstanding, superior magnetic properties are ensured, with the result that the economical effect is very large.

In the present invention, if the slab reheating temperature is below 1250°C, the AlN precipitates show large sizes and non-uniform distribution, so that the grain growth inhibiting strength would be too insufficient. Consequently, the secondary recrystallization becomes unstable, and therefore, it is not desirable. On the other hand, if the slab reheating temperature exceeds 1320°C, the electrical steel slab begins to be melted, with the result that the actual yield is lowered and the surface condition is aggravated. Therefore, the slab heating temperature should be desirably limited to a range of 1250 - 1320°C.

If only the surface condition is considered, the slab heating temperature should be desirably limited to less than 1300°C.

In the present invention, the steel slab composed of as described above is heated as described above. Then in the general method, a hot rolling, two-stage of cold rolling including a decarburization annealing, an intermediate annealing and a finish annealing are carried out, thereby manufacturing the oriented electrical steel sheet having superior magnetic properties.

More preferably, the steel slab composed of as described above is heated to the temperature as described above, and then, a hot rolling is carried out. Then without carrying out a hot rolled sheet annealing, one-stage of cold rolling is carried out into a thickness of 0.60 - 0.75 mm. Then a decarburization annealing is carried out in a humid atmosphere at 820 - 870°C, and then, a second cold rolling is carried out. Then an intermediate annealing is carried out at a temperature of 500 - 650°C, and then, there is coated an annealing separator having MgO as the main ingredient. Then a finish annealing is carried out at a temperature of 1150 - 1200°C for 10 hours or more, thereby obtaining an oriented electrical steel sheet having superior magnetic properties.

Under this condition, it is the particular feature of the present invention that the hot rolled sheet annealing is skipped after the hot rolling, and an acid wash is directly carried out to remove the surface scales, the cold rolling then being carried out. The reason why the first cold rolling is carried out down to a thickness of 0.60 - 0.75 mm is that a proper reduction ratio for the final product is to be ensured. Further, the fact that the decarburization annealing is carried out at an intermediate thickness is also a major feature of the present invention. The annealing at a temperature of 820 - 870°C under a humid atmosphere is a basic condition for decarburizing at a relatively thick thickness. Then a cold rolling is carried out to the final thickness. Then a recovery annealing is carried out at a temperature 500 - 600°C which is the temperature just before recrystallization. Then an annealing separator containing MgO as the main ingredient is coated, and then, a coiling is carried out. Then, a finish annealing is carried out at a temperature of 1150 - 1200°C for 10 hours or more, so that primary and secondary recrystallizations would occur. Then glass film is formed, and then, a purifying step is carried out, thereby obtaining a final product.

In another embodiment of the present invention, the process can be carried out in the following manner. That is, the steel slab is heated to the above mentioned temperature, and then, a hot rolling is carried out. Then without carrying out a hot rolled sheet annealing, a first cold rolling is carried out preferably into a thickness of 0.55 - 0.75 mm. Then a decarburization annealing is carried out preferably at a temperature of 820 - 870°C under a humid hydrogen atmosphere. Then a second cold rolling is carried out to the final thickness, and then, by skipping the low temperature intermediate recovery annealing, an annealing separator (fusion preventor) containing MgO as the main ingredient is coated. Then a final finish annealing is carried out at a temperature of 1150 - 1200°C, this being an alternative method.

In this case, the heating rate in the temperature range of 400 - 700°C in which the primary recrystallization occurs has to be limited to below 50°C/hr. The reason is that, if the heating rate is over 50°C/hr, there cannot be sufficiently secured the fine and uniform primary recrystallization grains which serve the role of a driving force for the secondary recrystallization. Consequently, the secondary recrystallization becomes insufficient, with the result that partially or totally fine grains are formed, thereby extremely aggravating the magnetic properties.

In another embodiment of the present invention, the process can be carried out in the following manner. That is, after heating the steel slab to the above mentioned temperature, a hot rolling is carried out, and then, without carrying out the hot rolled sheet annealing, a first cold rolling is carried out preferably into a thickness of 0.60 - 0.75 mm. Then a decarburization annealing is carried out preferably at a temperature of 820 - 870°C under a humid hydrogen atmosphere. Then a second cold rolling is carried out into the final thickness, and then, an intermediate recovery annealing is carried out at a temperature of 600 - 750°C under a humid atmosphere having a P_{H2O}/P_{H2} value of 0.62 - 0.88 for 45 seconds to 2 minutes. Then an annealing separator containing MgO as the main ingredient is coated, and then, a finish annealing is carried out at a temperature of 1150 - 1200°C for 10 hours or more, thereby obtaining an oriented electrical steel sheet having a superior glass film.

In the above described intermediate recovery annealing, if the annealing temperature is below 600°C, the oxide forming rate is too slow, thereby aggravating economical efficiency. If the annealing temperature exceeds 750°C, the primary recrystallization grains are formed so as to give a fatal adverse influence to the magnetic properties. Therefore, the present invention limits the intermediate recovery annealing temperature to 600 - 750°C.

Meanwhile, as the atmospheric gas for the intermediate recovery annealing, a composite gas of N₂ and H₂ gases is used, and the amount of the gas is not specially limited, while the ratio of P_{H20}/P_{H2} is limited to 0.62 - 0.88.

The reason why the ratio of P_{H20}/P_{H2} for the atmospheric gas is limited to 0.62 - 0.88 is as follows. That is, if the ratio is less than 0.62, the oxide forming rate is too slow, while if exceeds 0.88, the glass film thus formed becomes dark, non-uniform and rough, with the result that the space factor of the final product is lowered.

Further, if the time of the intermediate recovery annealing is less than 45 seconds, the oxides formed become non-uniform, while if it exceeds 2 minutes, the primary recrystallization can occur during the recovery annealing. Therefore, it is desirable to limit the time for the intermediate recovery annealing to 45 seconds to 2.0 minutes.

In the case where the above mentioned intermediate recovery annealing conditions are applied, a homogenous glass film can be formed, thereby obtaining an oriented electrical steel sheet having superior surface quality.

Now the present invention will be described based on actual examples.

### <Example 1>

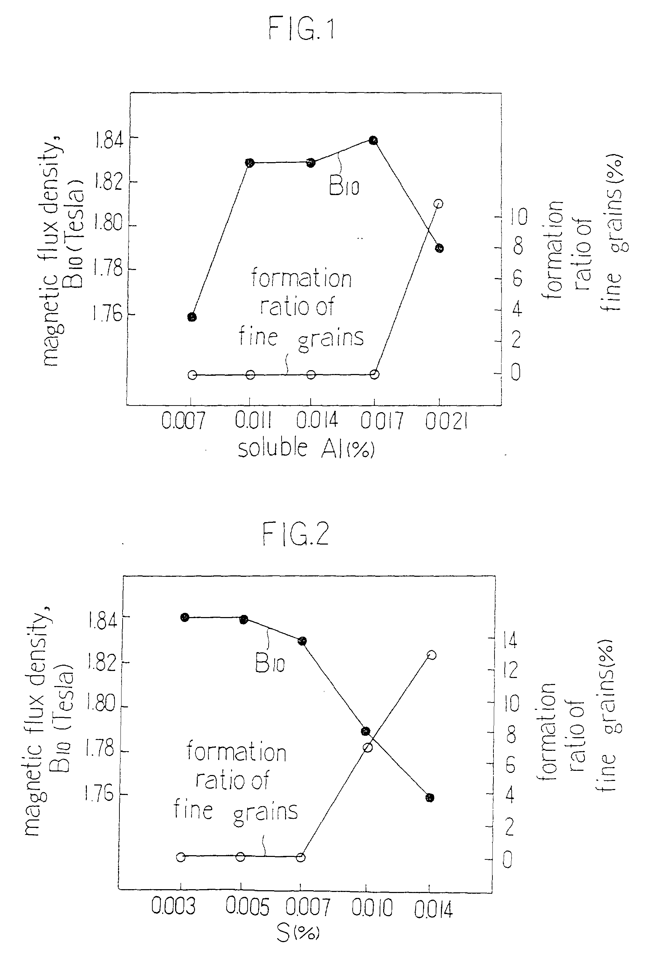

The basic composition system included in weight %: 0.042% of C, 3.11% of Si, 0.205% of Mn, 0.006% of S, 0.0098% of N, 0.014% of P, 0.496% of Cu, 0.04% of Cr and 0.06% of Ni. Further, the amount of soluble Al was varied to 0.007%, 0.011%, 0.014%, 0.017% and 0.020%, and thus, there were prepared steel slabs having a thickness of 200 mm. Then a slab heating was carried out at a temperature of 1275°C for 3 hours, and then, a hot rolling was carried out into a thickness of 2.3 mm, thereby forming hot rolled sheets. Then without carrying out a hot rolled sheet annealing, a first cold rolling was carried out into a thickness of 0.70 mm, and then, a decarburization annealing was carried out at a temperature of 830°C under a humid atmosphere. Then a final cold rolling was carried out into a thickness of 0.30 mm. Then an intermediate recovery annealing at a temperature of 550°C, an MgO coating, and a finish annealing at a temperature of 1200°C for 20 hours were carried out, thereby obtaining the conventional oriented electrical steel sheet. Then the magnetic flux densities B₁₀ and the fine grain formation ratio among the secondary recrystallization grains were checked, and the results were illustrated in FIG. 1. The value of the magnetic flux density B₁₀ is based on 1000 Amp/m, and this is the value of the magnetic flux density, the unit being Tesla.

As shown in FIG. 1, the magnetic flux density is 1.82 Teslas for the content range of 0.011 - 0.017% of soluble Al which is the condition of the present invention.

Further, the steel shows superior magnetic properties, having no fine grains. However, in the case of 0.007%, i.e., in the case where the range of the present invention is departed, although there are no fine grains, the grain size is too small and non-uniform, and therefore, the magnetic flux density is low. In the case of 0.020%, the secondary recrystallization grains are non-uniform, and there are large amounts of fine grains, with the result that the magnetic flux density is low. Therefore, the product becomes useless.

### <Example 2>

The basic composition system included in weight %: 0.043% of C, 3.15% of Si, 0.225% of Mn, 0.014% of soluble Al, 0.0104% of N, 0.015% of P, 0.521% of Cu, 0.05% of Cr, and 0.05% of Ni. The amounts of S were varied to 0.003%, 0.005%, 0.007%, 0.010% and 0.014%, and thus steel slabs of a 200 mm thickness were prepared. These slabs were made to undergo the slab heating step all through the final finish annealing step in the same way as that of the Example 1. For the oriented steel sheets thus obtained, the magnetic flux density B₁₀ and the formation of the fine grains of the secondary recrystallization were investigated, and the results were illustrated in FIG. 2.

As shown in FIG. 2, up to 0.007% of S which belongs to the range of the present invention, there are no fine grains, and the magnetic flux density shows over 1.83 Tesla. In the case where the S content is more than 0.007%, the formation of fine grains is drastically increased, thereby steeply lowering the magnetic flux density.

### <Example 3>

The basic composition system included in weight %: 0.039% of C, 3.05% of Si, 0.005% of Mn, 0.012% of soluble Al, 0.0110% of N, 0.015% of P, 0.505% of Cu, 0.05% of Cr, and 0.05% of Ni. Then the amounts of Mn were varied so that the ratios of Mn/S would become 10, 20, 35, 50 and 65 respectively, thereby preparing steel slabs of a 200 mm thickness. These slabs were made to undergo the slab heating step all through the finish annealing step in the same way as that of Example 1.

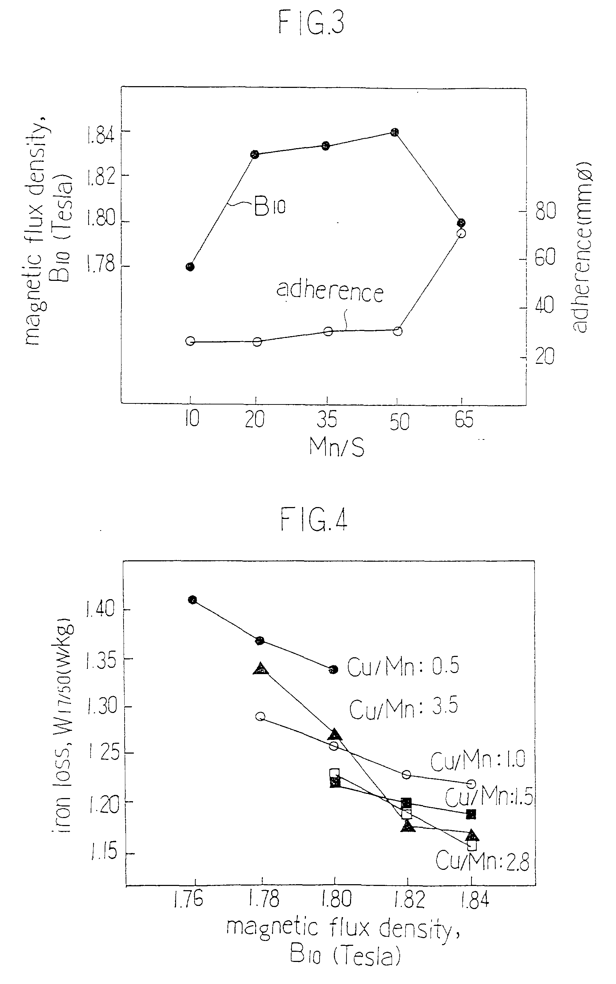

Then for the steel sheets thus obtained, the magnetic flux density B₁₀ was measured, and then, there was measured the minimum diameter in mm in which a film peeling does not occur upon bending by 180°, thereby testing the close adherence of the film. The tested results were illustrated in FIG. 3. As shown in FIG. 3, when the ratio of Mn/S is 10, the close adherence is superior by showing 25 mm∅, but the magnetic flux density is too low. However, in the case where the Mn content exceeds 0.32% so as for the ratio of Mn/S to be 65, the magnetic flux density is superior, but the close adherence characteristics of the product film is extremely bad by showing 70 mm∅. Therefore, this product has lost the commercial value, and therefore, it was excluded from the scope of the present invention.

However, over 20 of the ratio, the magnetic flux density is as high as 1.82 Tesla or over. Further, the close adherence characteristics is 25 - 30 mm⌀, and therefore, it comes within the control range of the present invention which is 30 mm⌀.

### <Example 4>

The basic composition system included in weight %: 0.044% of C, 3.01% of Si, 0.195% of Mn, 0.013% of soluble Al, 0.0105% of N, 0.014% of P, 0.05% of Cr, and 0.05% of Ni. Then the contents of Cu were varied in such a manner that the ratios of Cu/Mn should become 0.5, 1.0, 1.5, 2.8, and 3.5 respectively, thereby preparing steel slabs of a 200 mm thickness. These slabs were made to undergo the slab heating step all through the finish annealing step.

Then their magnetic properties were tested. That is, the magnetic flux density B₁₀ was measured, and there was also measured the iron loss W_{17/50} which is the iron loss when a magnetizing was carried out to 1.7 Tesla at 50 Hz. Then the tested results were illustrated in FIG. 4, that is, FIG. 4 illustrates the magnetic flux density and the iron loss versus the ratio of Cu/Mn. As shown in FIG. 4, if the ratio of Cu/Mn is as low as 0.5, the magnetic flux density goes down to below 1.80 Tesla, while the iron loss is extremely high. In the case where the ratio of Cu/Mn is 1.0, the magnetic flux density shows a wide range of 1.78-1.84 Tesla, and the property deviations and the iron loss are high, with the result that stable properties cannot be ensured. Further, in the case where the Cu content exceeds 0.6% to show a Cu/Mn ratio of 3.5, the iron loss is low in an overall view, but the magnetic flux density is as low as 1.78 in some of them. Therefore, this product was excluded from the scope of the present invention. However, in the steel of the present invention in which the Cu/Mn ratio is 1.5 - 2.8, the magnetic flux density showed as high as 1.80 Tesla, and the iron loss showed as low as 1.24 W/kg. Thus there were obtained products in which the magnetic properties were superior and stable.

### <Example 5>

The basic composition system included in weight %: 0.044% of C, 3.01% of Si, 0.195% of Mn, 0.005% of S, 0.013% of soluble Al, 0.0105% of N, 0.515% of Cu, and 0.014% of P. Then the contents of Cr and Ni were varied, thereby preparing steel slabs of a 200 mm thickness. These slabs were made to undergo the slab heating step all through the finish annealing. Then the magnetic flux density value B10 and the iron loss value W_{17/50} were measured, and the measured results were shown in Table 1 below.

**Table 1**

| Test specimen | Addition (%) | | Magnetic properties * | |
|---|---|---|---|---|
| | Cr | Ni | Flux density B₁₀ (T) | Iron loss W_{17/50}(W/kg) |
| Comparative 1 | 0 | 0 | 1.774 | 1.43 |
| " 2 | 0.02 | 0.04 | 1.785 | 1.38 |
| Inventive 1 | 0.07 | 0 | 1.824 | 1.18 |
| " 2 | 0.05 | 0.05 | 1.836 | 1.20 |
| " 3 | 0.10 | 0.08 | 1.830 | 1.24 |
| " 4 | 0.05 | 0.12 | 1.835 | 1.28 |
| Comparative 3 | 0.10 | 0.10 | 1.811 | 1.34 |
| " 4 | 0.15 | 0.15 | 1.803 | 1.38 |

| | | | | |
|---|---|---|---|---|
| * The magnetic flux density B₁₀ (Tesla) indicates a flux density obtained when the magnetizing is carried out with 1000 Amp/m. | | | | |
| * The iron loss W_{17/50} (W/kg) indicates an iron loss obtained when the magnetizing is carried out in such a manner that a flux density should be obtained with 50 Hz. | | | | |

As shown in Table 1 above, in the cases of the comparative steels 1 and 2 in which the contents of Cr and Ni were none or very small, the secondary recrystallization was unstable, with the result that fine grains were produced very much. Consequently, the magnetic flux density was low and the iron loss was high, thereby giving an inferior steel sheet.

On the other hand, in the cases of the inventive steels 1 to 4, the magnetic flux density was high, and the iron loss was low, thereby giving a superior electrical steel sheet. Meanwhile, in the cases of the comparative steels 3 and 4 in which the contents of the Cr and Ni exceeded 0.2%, the secondary recrystallization grains were small and non-uniform, and therefore, the magnetic properties were rather degraded.

### <Example 6>

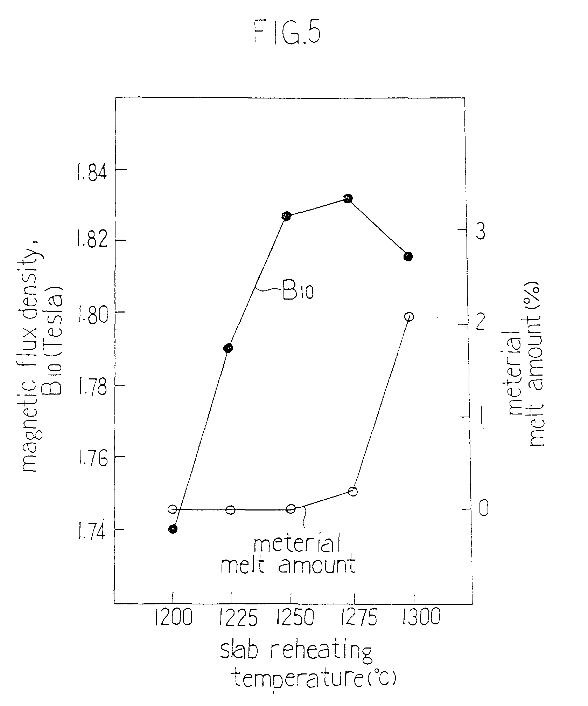

Steel slabs of a 200 mm thickness were prepared, and the slabs were composed of in weight %: 0.039% of C, 3.12% of Si, 0.225% of Mn, 0.005% of S, 0.014% of soluble Al, 0.0095% of N, 0.510% of Cu, 0.015% of P, 0.05% of Cr, 0.05% of Ni, and balance of Fe. For these steel slabs, the heating temperature was varied to 1200, 1225, 1250, 1275, 1300, 1325°C respectively, and at these temperatures, the slabs were soaked for 3 hours respectively. Then a hot rolling was carried out, and then, they were made to undergo the cold rolling all through the finish annealing. Then the magnetic flux density B₁₀ and the loss due to the melting of the material were checked, and the tested results were illustrated in FIG. 5.

As shown in FIG. 5, the magnetic flux density was improved as the slab heating temperature was elevated, and at the heating temperature of 1250°C, the flux density showed 1.83 Tesla, while the magnetic flux density was highest at the heating temperature of 1300°C.

However, at the heating temperature of 1325°C, a relatively high magnetic flux density was seen, but due to the increase in the melting of the material, not only the actual yield was lowered, but also the workability and the economical efficiency were aggravated. Therefore, it was excluded from the scope of the present invention.

However, in the heating temperature range of 1250 - 1275°C which is the range of the present invention, there was no melting at all, while at 1300°C, the formation of scales was increased, but there was no problem in the actual yield and the workability.

### <Example 7>

Steel slabs of a 200 mm thickness were prepared, and the steel slabs were composed of in weight %: 0.039% of C, 3.12% of Si, 0.225% of Mn, 0.005% of S, 0.014% of soluble Al, 0.0095% of N, 0.510% of Cu, 0.015% of P, 0.05% of Cr, 0.05% of Ni, and balance of Fe. These slabs were let to undergo the slab heating step all through the finish annealing in the same way as that of Example 1, thereby carrying out the process of the present invention. For comparison, comparative steels were manufactured based on a method of one-stage cold rolling and a method of two-stages cold rolling respectively.

In the case of the one-stage cold rolling method, a hot rolled sheet annealing was carried out at 1120°C, and then, one-stage of cold rolling was carried out into a final thickness of 0.30 mm. Then, a decarburization annealing at 830°C under a humid atmosphere, coating of MgO, and a final finish annealing at 1200°C for 20 hours were carried out.

In the case of the two-stage rolling method, a hot rolled sheet annealing was carried out at 1120°C, and then, a first cold rolling was carried out into a thickness of 0.75 mm. Then an intermediate annealing was carried out at 920°C, and then, a second cold rolling was carried out into a thickness of 0.30 mm. Then a decarburization annealing at 830°C under a humid atmosphere, coating of MgO, and a final finish annealing were carried out at 1200°C for 20 hours.

The magnetic properties of these three differently processed steels such as magnetic flux density B₁₀, the iron loss W_{17/50}, and the formation rate of fine grains of the secondary recrystallization were measured, and the measured results were shown in Table 2 below.

**Table 2**

| | Process | flux dnsity B₁₀ (Tesla) | Iron loss W_{17/50} (W/kg) | Fine grains (%) |
|---|---|---|---|---|
| Inventive 5 | - | 1.84 | 1.18 | 0 |
| Comparative 5 | one-stage rolling | 1.63 | 1.78 | 53 |
| " 6 | two-stage rollings | 1.75 | 1.48 | 14 |

As shown in Table 2 above, in the case where the process of the present invention is applied (the inventive steel 5), the magnetic properties were such that the magnetic flux density was high, and the iron loss was low. However, in the case where the usual one-stage rolling method was applied (the comparative steel 5), the secondary recrystallization was bad, and the formation of fine grains was high. Therefore, the magnetic flux density was extremely low, and the iron loss was high, thereby making it impossible to use it. Meanwhile, in the case of the usual two-stage rolling method (Comparative steel 6), the magnetic properties were slightly improved compared with the one-stage rolling method, but it was impossible to use the product.

### <Example 8>

Steel slabs of a 200 mm thickness were prepared, and the steel slabs were composed of in weight %: 0.035% of C, 3.14% of Si, 0.215% of Mn, 0.004% of S, 0.016% of soluble Al, 0.0093% of N, 0.515% of Cu, 0.013% of P, 0.04% of Cr, 0.05% of Ni, and balance of Fe.

Theses slabs were heated at a temperature of 1300°C for 3 hours, and then, a hot rolling was carried out. Then without carrying out a hot rolled sheet annealing, a first rolling was carried out into a thickness of 0.65 mm. Then a decarburization annealing was carried out at a temperature of 850°C under a humid atmosphere, and a final cold rolling was carried out into a thickness of 0.30 mm. Then a recovery annealing was carried out at a temperature of 550°C for 2 minutes under a dry atmosphere, and then, an annealing separator containing MgO as the main ingredient was coated, and a coiling was carried out into rolls. Then the rolls were heated rapidly up to 400°C, and the heating rate was varied within a range of 10 - 100°C/hr up to 700°C. Then the rolls were further heated up to 1200°C at a heating rate of 20°C/hr, and the rolls were soaked at 1200°C for 20 hours. Then a cooling was carried out, thereby completing the finish annealing. Under this condition, the atmospheric gas was composed of 25% of nitrogen and 75% of hydrogen during the heating, and otherwise the atmospheric gas was composed of 100% of hydrogen, thereby manufacturing the conventional oriented electrical steel sheets. For these sheets, the magnetic flux density and the iron loss were measured, and the measured results are shown in Table 3 below.

**Table 3**

| | heating rate | | magnetic properties * | |
|---|---|---|---|---|
| | (°C/hr) | | | |
| | 400-700°C | 700-1200°C | Flux density (Tesla) | Iron loss (W/kg) |
| Comparative 7 | 7 | 20 | 1.66 | 1.84 |
| " 8 | 15 | 20 | 1.78 | 1.52 |
| Inventive 6 | 20 | 20 | 1.84 | 1.23 |
| " 7 | 30 | 20 | 1.86 | 1.19 |
| " 8 | 50 | 20 | 1.87 | 1.16 |
| " 9 | 100 | 20 | 1.86 | 1.17 |

| | | | | |
|---|---|---|---|---|
| * Magnetic flux density B₁₀ (Tesla): magnetic flux density induced when magnetized with 1000 Amp/m. * Iron loss W_{17/50} (W/kg): iron loss caused when magnetized such that 1.7 Teslas are obtained at 50 Hz. | | | | |

As shown in Table 3 above, as the first heating rate was high, so much superior was the magnetic properties. Particularly, above 20°C/hr which is the condition of the present invention, the magnetic flux density was as high as 1.84, and the iron loss was as low as 1.23 W/kg, thereby showing superior magnetic properties.

However, in the comparative steels 7 and 8 in which the first heating rate was low, the secondary recrystallization was unstable, and fine grains were formed, with the result that the magnetic properties were drastically degraded.

### <Example 9>

Steel slabs of a 200 mm thickness were prepared, and the steel slabs were composed of as shown in Table 4 below. Then the slabs were heated at 1275°C for 3 hours, and then, a hot rolling was carried out into a thickness of 2.3 mm. Then without carrying out a hot rolled sheet annealing, an pickling was carried out and then, a hot rolling was carried out. Then a cold rolling was carried out into a thickness of 0.60 mm, and then, a decarburization annealing was carried out at a temperature 860°C under a humid atmosphere. Then a final cold rolling was carried out into a thickness of 0.30 mm.

For some of the cold rolled sheet, an intermediate annealing was carried out at 550°C for 2 minutes (conventional method), while for some of the cold rolled sheet, the intermediate annealing was not carried out (method of the present invention). On these two kinds of sheets, an annealing separator containing MgO as the main ingredient was coated, and then, the sheets were coiled into rolls. The temperature was raised up to 700°C at heating rate of 80°C/hr for the conventional steel, and at a heating rate of 25°C/hr for the steel of the present invention respectively. Then the temperature was raised up to 1200°C at a heating rate of 20°C/hr for the both kinds of the steels, and this temperature was maintained for 20 hours, thereby completing the finish annealing to obtain conventional oriented electrical steel sheets.

For the oriented electrical steel sheets manufactured as described above, the magnetic flux density B₁₀ and the iron loss W_{17/50} were measured, and the measured results are shown in Table 5 below.

**Table 4**

| composition | C | Si | P | N | S | Ni+Cr | Mn | Cu | Sol.Al |
|---|---|---|---|---|---|---|---|---|---|
| melts | | | | | | | | | |
| C-1 | 0.038 | 3.02 | 0.014 | 0.009 | 0.005 | 0.092 | 0.212 | 0.501 | 0.016 |
| C-2 | 0.044 | 3.21 | 0.013 | 0.011 | 0.003 | 0.114 | 0.208 | 0.508 | 0.012 |
| C-3 | 0.040 | 3.21 | 0.014 | 0.009 | 0.006 | 0.104 | 0.212 | 0.501 | 0.019 |

**Table 5**

| | C-1 | | C-2 | | C-3 | |
|---|---|---|---|---|---|---|
| | Flux density B₁₀(T) | Iron loss W_{17/50} (W/kg) | Flux density B₁₀(T) | Iron loss W_{17/50} (W/kg) | Flx density B₁₀(T) | Iron loss W_{17/50} (W/kg) |
| Conventional | 1.86 | 1.20 | 1.84 | 1.27 | 1.85 | 1.22 |
| Inventive | 1.86 | 1.19 | 1.85 | 1.25 | 1.85 | 1.21 |

As shown in Table 5 above, in the steels C-1, C-2 and C-3, compared with the conventional steel in which a second intermediate recovery annealing is carried out at 550°C, the steel of the present invention in which no such annealing was carried out showed similar magnetic flux densities and iron losses or slightly superior levels.

However, the present invention shortens the manufacturing process, and therefore, economical efficiency is improved.

### <Example 10>

Steel slabs of a 200 mm thickness were prepared by using the steel C-2 of Table 4, and these steel slabs were reheated at 1275°C for 3 hours. Then a hot rolling was carried out into a thickness of 2.3 mm, and then, without carrying out a hot rolled sheet annealing, a first cold rolling was carried out into a thickness of 0.65 mm. Then, a decarburization annealing was carried out at 850°C under a humid atmosphere, and then, a final cold rolling was carried out into a thickness of 0.30 mm. Then skipping a second recovery annealing, an annealing separator containing MgO as the main ingredient was coated, and then, a coiling was carried out into rolls. Then a rapid heating was carried out up to 400°C, and then, the temperature was raised up to 700°C with the heating rate varied within a range of 10-100°C/hr. Then the temperature was raised at a heating rate of 20°C/hr, and a soaking was carried out at this temperature for 20 hours, thereby completing the finish annealing. Under this condition, the atmospheric gas was composed of 25% of nitrogen and 75% of hydrogen during the heating, and otherwise, the atmospheric gas was composed of 100% of hydrogen, thereby manufacturing conventional oriented electrical steel sheet. For these steel sheets, the magnetic flux density B₁₀ and the iron loss W_{17/50} were measured, and the results are shown in Table 6 below.

**Table 6**

| Test specimen | hating rate(°C/hr) | | Magnetic properties | |
|---|---|---|---|---|
| | 400-700°C | 700-1200°C | Flux density B₁₀(Tesla) | Iron loss W_{17/50}(W/kg) |
| Inventive 10 | 10 | 20 | 1.86 | 1.17 |
| " 11 | 25 | 20 | 1.86 | 1.19 |
| " 12 | 50 | 20 | 1.84 | 1.26 |
| Comparative 9 | 100 | 20 | 1.80 | 1.47 |

As shown in Table 6 above, the slower the initial heating rate was, the more superior the magnetic properties were. However, superior magnetic properties were seen up to 50°C/hr which is the condition of the present invention. However, at a heating rate of 100°C/hr which departs from the condition of the present invention, the secondary recrystallization became unstable to form fine grains, and therefore, the magnetic properties were drastically aggravated, with the result that the product became useless.

### <Example 11>

Continuous casting steel slabs 200 mm thick were prepared, and the steel slabs were composed of in weight %: 0.042% of C, 3.117% of Si, 0.205% of Mn, 0.006% of S, 0.00983% of N, 0.014% of P, 0.496% of Cu, 0.04% of Cr, 0.06% of Ni and 0.014% of soluble Al. These slabs were reheated at 1300°C for 3 hours, and then, a hot rolling was carried out into a thickness of 2.3 mm. Then without carrying out a hot rolled sheet annealing, a first cold rolling was carried out into a thickness of 0.65 mm, and then, a decarburization annealing was carried out at 860°C under a humid atmosphere to reduce the residue content of C. Then a final cold rolling was carried out into a thickness of 0.30 mm. Then, a second recovery annealing was carried out at an annealing temperature of 550 - 800°C under a 10% hydrogen containing nitrogen atmosphere, with the P_{H2O}/P_{H2} ratio being varied from dry to 0.96, and with the maintenance time in furnace being varied from 0.5 to 2.5 minutes. Thereafter, MgO was coated, and a finish annealing was carried out at 1200°C for 20 hours, thereby obtaining conventional oriented electrical steel sheets.

For the steel sheets manufactured based on the above described method, the glass film characteristics (appearance and insulating strength) and the magnetic properties (the magnetic flux density and the iron loss) for the different recovery annealing conditions were measured, and the measured results are shown in Table 7 below.

In Table 7 below, the appearance of the glass film is the forsterite film formation state which was observed by the human eyes, while the insulating property is the currents in amperes which passed through the coating when 0.5 volts and 1.0 amperes were supplied by using the Franklin Insulation Tester based on the testing method of ASTM A717-15. If the value of the received current is low, the insulating characteristics are so much superior.

**Table 7**

| | Condition for recovery annealing | | | Glass film characteristics | | Magnetic properties * | |
|---|---|---|---|---|---|---|---|
| Steel | temp. (°C) | P_{H₂O} /P_{H₂} | time | insula ting value (Amp) | appearance | Magnetic flux density B₁₀ (Tesia) | Iron loss , W_{17/50}(W/Kg) |
| Comparative -10 | 550 | 0.80 | 1.2 | 0.645 | thin and rough | 1.85 | 1.24 |
| Inventive -13 | 650 | 0.80 | 1.2 | 0.556 | slightly thin | 1.86 | 1.24 |
| " -14 | 700 | 0.80 | 1.2 | 0.486 | good | 1.84 | 1.23 |
| " -15 | 750 | 0.80 | 1.2 | 0.459 | good | 1.85 | 1.25 |
| Comparative -11 | 800 | 0.80 | 1.2 | 0.433 | good | 1.80 | 1.30 |
| " -12 | 700 | dry | 1.2 | 0.725 | thin and rough | 1.84 | 1.24 |
| " - 13 | 700 | 0.45 | 1.2 | 0.687 | thin and rough | 1.85 | 1.23 |
| Inventive -16 | 700 | 0.63 | 1.2 | 0.535 | slightly thin | 1.86 | 1.24 |
| " -17 | 700 | 0.75 | 1.2 | 0.448 | good | 1.84 | 1.25 |
| " -18 | 700 | 0.86 | 1.2 | 0.452 | good | 1.86 | 1.24 |
| Comparative -14 | 700 | 0.96 | 1.2 | 0.534 | dark and nonuniform | 1.84 | 1.25 |
| " -15 | 700 | 0.80 | 0.5 | 0.618 | thin and rough | 1.85 | 1.24 |
| Inventive -19 | 700 | 0.80 | 0.8 | 0.512 | good | 1.85 | 1.25 |
| " -20 | 700 | 0.80 | 2.0 | 0.425 | good | 1.85 | 1.24 |
| Comparative-16 | 700 | 0.80 | 2.5 | 0.588 | thick and rough | 1.82 | 1.28 |

| | | | | | | | |
|---|---|---|---|---|---|---|---|
| * Magnetic flux density B₁₀ (Tesla) : the magnetic flux density induced when magnetized with 1000 Amp/m. * Iron loss W_{17/50} (W/kg) : the iron loss when magnetized such that 1.7 Tesla is obtained at 50 Hz. | | | | | | | |

As shown in Table 7 above, in the case where the intermediate recovery annealing was carried out at a temperature of 550°C, the magnetic properties were adequate, but the glass film was too thin and rough, with the result that the insulating property was aggravated. On the other hand, in the case where the intermediate recovery annealing was carried out at a temperature of 650°C which is the condition of the present invention, although the thickness was somewhat thin, the insulating strength was satisfactory as much as intended. Further, at a temperature of over 650°C up to 750°C, not only the magnetic properties but also the glass coating were superior.

However, if the intermediate recovery annealing was carried out at 800°C, not only the glass film was rough, but also the magnetic properties were drastically aggravated.

Meanwhile, in the case where the intermediate recovery annealing was carried out under a dry atmosphere or at 0.45 of the P_{H2O}/P_{H2} ratio, the magnetic properties were adequate, but the glass film was too thin as well as being too weak in the insulating property. On the other hand, in the case where the intermediate recovery annealing was carried out at a ratio of 0.62 - 0.88 which is the range of the present invention, the glass film is uniform, its color is desirable, and its insulating property is adequate.

However, if the humidity of the furnace atmosphere exceeded the mentioned range, the glass film was dark and rough, and its insulating strength was aggravated.

In the case where the time for the intermediate recovery annealing was 30 seconds, it was too short to complete the coating formation. However, if the time was 0,8 - 2,0 minutes, an optimum glass film could be obtained. If the annealing time was longer than the mentioned range, the magnetic properties which is the condition for the present invention were aggravated.

## Claims

1. A method for manufacturing an oriented electrical steel sheet based on a low temperature slab heating, **characterised by** the steps of:
(i) preparing a steel slab composed of in weight %: 0.035 - 0.050% of C, 2.9-3.3% of Si, less than 0.015% of P, 0.011 - 0.017% of soluble Al, 0.0080-0.012% of N, less than 0.007% of S, 0.06 - 0.18% of Ni and/or Cr, less than 0.32% of Mn, less than 0.6% of Cu, and balance of Fe and other inevitable impurities, said steel slab having an Mn/S weight ratio of more than 20.0, and having a Cu/Mn weight ratio of more than 1.5;
(ii) heating said steel slab to a temperature of 1250 ∼ 1320°C;
(iii) hot rolling the heated steel slab to provide a hot rolled steel sheet;
(iv) cold rolling the hot rolled steel sheet in two stages into a final thickness, including the step of performing a decarburization annealing between the two stages of said cold rolling to provide a decarburized cold rolled steel sheet;
(v) carrying out an intermediate recovery annealing on said decarburized cold steel;
(vi) coating said intermediate annealed cold rolled sheet with an annealing separator containing MgO as a main ingredient to provide a coated cold rolled steel sheet; and
(vii) carrying out finish annealing of said coated cold rolled steel sheet.

2. The method as claimed in claim 1, **characterised in that**:
(i) a first cold rolling stage of the two-stage cold rolling is carried out on the hot rolled steel sheet to reduce its thickness to 0.60 - 0.75mm;
(ii) the decarburization annealing is carried out at a temperature of 820 - 870°C;
(iii) a second cold rolling stage of said two-stage cold rolling is carried out to reduce the steel sheet to a final thickness;
(iv) the intermediate recovery annealing is carried out on said decarburized cold steel sheet at a temperature of 500 - 600°C prior to the step of coating with an annealing separator; and wherein
(v) said finish annealing of said coated cold rolled steel sheet is carried out at a temperature of 1150 - 1200°C for 10 hours or more.

3. The method as claimed in any one of claims 1 and 2, **characterised in that** said final finish annealing of said coated cold rolled steel sheet is carried out by maintaining a heating rate of 20°C/hr or over.

4. The method as claimed in claim 1, **characterised in that**:
(i) a first cold rolling stage of the two-stage cold rolling is carried out on the hot rolled steel sheet to reduce its thickness to 0.60 - 0.75mm;
(ii) the decarburization annealing is carried out at a temperature of 820 - 870°C;
(iii) a second cold rolling stage of said two-stage cold rolling is carried out to reduce the steel sheet to a final thickness;
(iv) the intermediate recovery annealing is carried out on said decarburized cold steel at a temperature of 600 - 750°C for 45 seconds to 2 minutes under humid atmosphere having a P_{H20}/P_{H2} ratio of 0.62 - 0.88, whereby a glass film is improved, prior to the step of coating with an annealing separator; and
(v) wherein said finish annealing of said coated cold rolled steel sheet is carried out at a temperature of 1150 - 1200°C for 10 hours or more.

5. A method for manufacturing an oriented electrical steel sheet based on a low temperature slab heating, **characterised by** the steps of:
(i) preparing a steel slab composed in weight %: 0.035 - 0.050% of C, 2.9-3.3% of Si, less than 0.015% of P, 0.011 - 0.017% of soluble Al, 0.0080-0.012% of N, less than 0.007% of S, 0.06 - 0.18% of Ni and/or Cr, less than 0.32% of Mn, less than 0.6% of Cu, and balance of Fe and other inevitable impurities, said steel slab having an Mn/S weight ratio of more than 20.0, and having a Cu/Mn weight ratio of more than 1.5;
(ii) heating said steel slab to a temperature of 1250 - 1320°C;
(iii) hot rolling the heated steel slab to provide a hot rolled steel sheet;
(iv) cold rolling the hot rolled steel sheet in two stages into a final thickness, including the step of performing a decarburization annealing between the two stages of said cold rolling to provide a decarburized cold rolled steel sheet;
(v) coating the decarburized cold rolled steel sheet with annealing separator containing MgO as a main ingredient to provide a coated cold rolled steel sheet; and
(vi) carrying out finish annealing on said coated cold rolled steel sheet at a temperature of 1150 - 1250°C, while maintaining a heating rate of 50°C/hr or less in a temperature range of 400 ∼ 700°C.

6. The method as claimed in claim 5, **characterised in that**:
(i) a first cold rolling stage of the two-stage cold rolling is carried out on the hot rolled steel sheet to reduce its thickness to 0.55 - 0.75mm;
(ii) the decarburization annealing is carried out at a temperature of 820 - 870°C;
(iii) a second cold rolling stage of said two-stage cold rolling is carried out to reduce the steel sheet to a final thickness, and wherein
(iv) said finish annealing of said coated cold rolled steel sheet is carried out at a temperature of 1150 - 1200 °C for 10 hours or more.

## Patentansprüche

1. Verfahren zur Herstellung eines orientierten Elektrostahlblechs auf der Basis niedriger Brammenaufheizemperaturen, **gekennzeichnet durch** die folgenden Schritte:
(i) Bereitstellen einer Stahlbramme mit den Anteilen (in Gew.-%): 0,035-0,050 % von C; 2,9 - 3,3 % von Si; weniger als 0,015 % von P; 0,011-0,017 % von gelöstem Al; 0,0080 - 0,012 % von N; weniger als 0,007 % von S; 0,06 - 0,18 % von Ni und/oder Cr; weniger als 0,32 % von Mn; weniger als 0,6 % von Cu; und Fe als Hauptbestandteil sowie weiteren, unvermeidlichen Verunreinigungen; wobei diese Stahlbramme ein Mn/S-Massenverhältnis von mehr als 20,0 und ein Cu/Mn-Massenverhältnis von mehr als 1,5 hat;
(ii) Aufheizen dieser Stahlbramme auf eine Temperatur von 1250 ∼ 1320 °C;
(iii) Warmwalzen der aufgeheizten Stahlbramme, um ein warmgewalztes Stahlblech zur Verfügung zu stellen;
(iv) Kaltwalzen des warmgewalzten Stahlblechs in zwei Stufen auf eine endgültige Dicke, einschließlich des Schrittes der Durchführung eines Entkohlungsglühens zwischen den zwei Kaltwalz-Stufen, um ein entkohltes, kaltgewalztes Stahlblech zur Verfügung zu stellen;
(v) Anwendung eines zwischenzeitlichen Erholungsglühens auf den entkohlten, kaltgewalzten Stahl;
(vi) Überziehen des zwischengeglühten, kaltgewalzten Blechs mit einem Glüh-Separator, der MgO als Hauptbestandteil enthält, um ein mit einem Überzug versehenes, kaltgewalztes Stahlblech zur Verfügung zu stellen; und
(vii) Ausführen eines Fertigglühschrittes auf das mit einem Überzug versehene, kaltgewalzte Stahlblech.

2. Verfahren nach Anspruch 1; **gekennzeichnet durch** die folgenden Merkmale:
(i) das warmgewalzte Stahlblech- wird im Rahmen des zweistufigen Kaltwalzens einem ersten Kaltwalzdurchgang unterzogen, um dessen Stärke auf 0,60 - 0,75 mm zu reduzieren;
(ii) der Entkohlungsglühschritt wird bei einer Temperatur von 820 - 870 °C durchgeführt;
(iii) im Rahmen des zweistufigen Kaltwalzens wird ein zweiter Kaltwalzdurchgang ausgeführt, um die Stärke des Stahlblechs auf den endgültigen Wert zu reduzieren;
(iv) vor dem Schritt des Überziehens mit einem Glüh-Separator wird das entkohlte, kaltgewalzte Stahlblech einem zwischenzeitlichen Erholungsglühschritt bei einer Temperatur von 500 - 600 °C unterzogen; und
(v) das abschließende Glühen des mit einem Überzug versehenen, kaltgewalzten Stahlblechs wird bei einer Temperatur von 1150 - 1200 °C durchgeführt für einen Zeitraum von 10 oder mehr Stunden.

3. Verfahren nach einem der Ansprüche 1 oder 2, **dadurch gekennzeichnet, dass** das abschließende Glühen des mit einem Überzug versehenen, kaltgewalzten Stahlblechs unter Einhaltung einer Heizrate von 20 °C/h oder darüber durchgeführt wird.

4. Verfahren nach Anspruch 1, **gekennzeichnet durch** die folgenden Merkmale:
(i) das warmgewalzte Stahlblech wird im Rahmen des zweistufigen Kaltwalzens einem ersten Kaltwalzdurchgang unterzogen, um dessen Stärke auf 0,60 - 0,75 mm zu reduzieren;
(ii) der Entkohlungsglühschritt wird bei einer Temperatur von 820 - 870 °C durchgeführt;
(iii) im Rahmen des zweistufigen Kaltwalzens wird ein zweiter Kaltwalzdurchgang ausgeführt, um die Stärke des Stahlblechs auf den endgültigen Wert zu reduzieren;
(iv) vor dem Schritt des Überziehens mit einem Glüh-Separator wird das entkohlte, kaltgewalzte Stahlblech für einen Zeitraum von 45 Sekunden bis zu 2 Minuten einem zwischenzeitlichen Erholungsglühschritt bei einer Temperatur von 600 - 750 °C unter einer feuchten Atmosphäre mit einem P_{H2O}/P_{H2}-Verhältnis von 0,62-0,88 unterzogen, wodurch ein Glasfilm verbessert wird; und
(v) das abschließende Glühen des mit einem Überzug versehenen, kaltgewalzten Stahlblechs wird bei einer Temperatur von 1150 - 1200 °C durchgeführt für einen Zeitraum von 10 oder mehr Stunden.

5. Verfahren zur Herstellung eines orientierten Elektrostahlblechs auf der Basis niedriger Brammenaufheizemperaturen, **gekennzeichnet durch** die folgenden Schritte:
(i) Bereitstellen einer Stahlbramme mit den Anteilen (in Gew.-%): 0,035-0,050 % von C; 2,9 - 3,3 % von Si; weniger als 0,015 % von P; 0,011-0,017 % von gelöstem Al; 0,0080 - 0,012 % von N; weniger als 0,007 % von S; 0,06 - 0,18 % von Ni und/oder Cr; weniger als 0,32 % von Mn; weniger als 0,6 % von Cu; und Fe als Hauptbestandteil sowie weiteren, unvermeidlichen Verunreinigungen; wobei diese Stahlbramme ein Mn/S-Massenverhältnis von mehr als 20,0 und ein Cu/Mn-Massenverhältnis von mehr als 1,5 hat;
(ii) Aufheizen dieser Stahlbramme auf eine Temperatur von 1250 - 1320 °C;
(iii) Warmwalzen der aufgeheizten Stahlbramme, um ein warmgewalztes Stahlblech zur Verfügung zu stellen;
(iv) Kaltwalzen des warmgewalzten Stahlblechs in zwei Stufen auf eine endgültige Dicke, einschließlich des Schrittes der Durchführung eines Entkohlungsglühens zwischen den zwei Kaltwalz-Stufen, um ein entkohltes, kaltgewalztes Stahlblech zur Verfügung zu stellen;
(v) Überziehen des entkohlten, kaltgewalzten Stahlblechs mit einem Glüh-Separator, der MgO als Hauptbestandteil enthält, um ein mit einem Überzug versehenes, kaltgewalztes Stahlblech zur Verfügung zu stellen; und
(vi) Anwenden eines Fertigglühschrittes auf das mit einem Überzug versehene, kaltgewalzte Stahlblech bei einer Temperatur von 1150-1250 °C, wobei eine Heizrate von 50 °C/h oder weniger innerhalb eines Temperaturbereichs von 400 ∼ 700 °C eingehalten wird.

6. Verfahren nach Anspruch 5, **gekennzeichnet durch** die folgenden Merkmale:
(i) das warmgewalzte Stahlblech wird im Rahmen des zweistufigen Kaltwalzens einem ersten Kaltwalzdurchgang unterzogen, um dessen Stärke auf 0,55 - 0,75 mm zu reduzieren;
(ii) der Entkohlungsglühschritt wird bei einer Temperatur von 820 - 870 °C durchgeführt;
(iii) im Rahmen des zweistufigen Kaltwalzens wird ein zweiter Kaltwalzdurchgang ausgeführt, um die Stärke des Stahlblechs auf den endgültigen Wert zu reduzieren; und
(iv) das abschließende Glühen des mit einem Überzug versehenen, kaltgewalzten Stahlblechs wird bei einer Temperatur von 1150 - 1200 °C durchgeführt für einen Zeitraum von 10 oder mehr Stunden.

## Revendications

1. Procédé pour fabriquer une tôle d'acier électrique orientée sur la base du chauffage d'une brame à une faible température, **caractérisé par** les étapes consistant à :
(i) préparer une brame d'acier constituée en % en poids par : 0,035-0,050 % de C, 2,9-3,3 % de Si, moins de 0,015 % de P, 0,011-0,017 % de Al soluble, 0,0080-0,012 % de N, moins de 0,007 % de S, 0,06-0,18 % de Ni et/ou de Cr, moins de 0,32 % de Mn, moins de 0,6 % de Cu et le reste étant formé de fer et d'autres impuretés inévitables, ladite brame d'acier possédant un rapport pondéral Mn/S supérieur à 20,0, et comportant un rapport pondéral Cu/Mn supérieur à 1,5 ;
(ii) chauffer ladite brame d'acier à une température de 1 250-1 320°C ;
(iii) laminer à chaud la brame d'acier chauffée pour former une tôle d'acier laminée à chaud ;
(iv) laminer à froid la feuille d'acier laminée à chaud, en deux étapes, pour l'amener à son épaisseur finale, y compris l'étape d'exécution d'un recuit de décarburation entre les deux étapes dudit laminage à froid pour obtenir une tôle d'acier laminée à froid et décarburée ;
(v) appliquer un recuit de récupération intermédiaire audit acier froid décarburé ;
(vi) recouvrir ladite tôle laminée à froid ayant subi un recuit intermédiaire à l'aide d'un séparateur de recuit contenant du MgO comme ingrédient principal pour obtenir une tôle d'acier laminé à froid et recouverte ; et
(vii) exécuter un recuit final de ladite tôle d'acier laminée à froid recouverte.

2. Procédé selon la revendication 1, **caractérisé en ce que** :
(i) on applique une première étape de laminage à froid du laminage à froid en deux étapes à la tôle d'acier laminée à chaud pour réduire son épaisseur à 0,60-0,75 mm ;
(ii) on exécute le recuit de décarburation à une température de 820-870°C ;
(iii) on met en oeuvre une seconde étape de laminage à froid dudit laminage à froid en deux étapes pour réduire l'épaisseur de la tôle d'acier en l'amenant à une épaisseur finale ;
(iv) on exécute le recuit de récupération intermédiaire sur ladite tôle d'acier froide décarburée à une température de 500-600°C avant l'étape de revêtement avec un séparateur de recuit, et selon lequel :
(v) on exécute ledit recuit de finition de ladite tôle d'acier laminée à froid et recouverte à une température de 1 150-1 200°C pendant 10 heures ou plus.

3. Procédé selon l'une quelconque des revendications 1 et 2, **caractérisé en ce que** ledit recuit final de finition de ladite tôle d'acier laminé à froid et recouverte est exécuté par maintien d'une cadence de chauffage de 20°C/h ou plus.

4. Procédé selon la revendication 1, **caractérisé en ce que** :
(i) on applique une première étape de laminage à froid du laminage à froid en deux étapes à la tôle d'acier laminée à chaud pour réduire son épaisseur à 0,60-0,75 mm ;
(ii) on exécute le recuit de décarburation à une température de 820-870°C ;
(iii) on met en cèuvre une seconde étape de laminage à froid dudit laminage à froid en deux étapes pour réduire l'épaisseur de la tôle d'acier en l'amenant à une épaisseur finale ;
(iv) on exécute le recuit de récupération intermédiaire sur l'acier froid décarburé à une température de 600-750°C pendant une durée comprise entre 45 secondes et 2 minutes dans une atmosphère humide avec un rapport **P**_{**H20**}**/P**_{**H2**} égal à 0,62-0,88, ce qui a pour effet qu'un film de verre est amélioré, avant l'étape de recouvrement par un séparateur de recuit ; et
(v) on exécute ledit recuit de finition de ladite tôle d'acier laminée à froid et recouverte à une température de 1 150-1 200°C pendant 10 heures ou plus.

5. Procédé pour fabriquer une tôle d'acier électrique orientée sur la base du chauffage d'une brame à une faible température, **caractérisé par** les étapes consistant à :
(i) préparer une brame d'acier constituée en % en poids par : 0,035-0,050 % de C, 2,9-3,3 % de Si, moins de 0,015 % de P, 0,011-0,017 % de A1 soluble, 0,0080-0,012 % de N, moins de 0,007 % de S, 0,06-0,18 % de Ni et/ou de Cr, moins de 0,32 % de Mn, moins de 0,6 % de Cu et le reste étant formé de fer et d'autres impuretés inévitables, ladite brame d'acier possédant un rapport pondéral Mn/S supérieur à 20,0, et comportant un rapport pondéral Cu/Mn supérieur à 1,5 ;
(ii) chauffer ladite brame d'acier à une température de 1 250-1 320°C ;
(iii) laminer à chaud la brame d'acier chauffée pour former une tôle d'acier laminée à chaud ;
(iv) laminer à froid la feuille d'acier laminée à chaud, en deux étapes, pour l'amener à son épaisseur finale, y compris l'étape d'exécution d'un recuit de décarburation entre les deux étapes dudit laminage à froid pour obtenir une tôle d'acier laminée à froid et décarburée ;
(v) recouvrir la tôle d'acier laminée à froid et décarburée avec un séparateur de recuit contenant du MgO comme ingrédient principal pour produire une tôle d'acier laminée à froid et recouverte ; et
(vi) exécuter un recuit de finition sur ladite tôle d'acier laminée à froid et recouverte à une température de 1 150-1 250°C, tout en conservant une cadence de chauffage de 50°C/h ou moins dans une gamme de températures de 400-700°C.

6. Procédé selon la revendication 5, **caractérisé en ce que** :
(i) on applique une première étape de laminage à froid du laminage à froid en deux étapes à la tôle d'acier laminée à chaud pour réduire son épaisseur à 0,55-0,75 mm ;
(ii) on exécute le recuit de décarburation à une température de 820-870°C ;
(iii) on met en oeuvre une seconde étape de laminage à froid dudit laminage à froid en deux étapes pour réduire l'épaisseur de la tôle d'acier en l'amenant à une épaisseur finale, et selon lequel :
(iv) on exécute ledit recuit de finition de ladite tôle d'acier laminée à froid et recouverte à une température de 1 150-1 200°C pendant 10 heures ou plus.
